(19) Europäisches Patentamt
European Patent Office
Office européen des brevets

(11) EP 0 891 305 B1

(12) **EUROPÄISCHE PATENTSCHRIFT**

(45) Veröffentlichungstag und Bekanntmachung des Hinweises auf die Patenterteilung:
**11.07.2001 Patentblatt 2001/28**

(21) Anmeldenummer: **97916437.3**

(22) Anmeldetag: **04.04.1997**

(51) Int Cl.$^7$: **C02F 11/00**, B09C 1/00

(86) Internationale Anmeldenummer:
**PCT/EP97/01701**

(87) Internationale Veröffentlichungsnummer:
**WO 97/37943 (16.10.1997 Gazette 1997/44)**

(54) **VERFAHREN UND VORRICHTUNG ZUR VERFESTIGUNG VON GROSSEN MENGEN PASTÖSER MASSEN**

METHOD AND INSTALLATION FOR SOLIDIFYING LARGE QUANTITIES OF SLURRY-LIKE MATERIALS

PROCEDE ET DISPOSITIF PERMETTANT DE COMPACTER DES QUANTITES IMPORTANTES DE MATIERES PATEUSES

(84) Benannte Vertragsstaaten:
**AT BE CH DE ES FR LI NL**

(30) Priorität: **05.04.1996 DE 19613679**

(43) Veröffentlichungstag der Anmeldung:
**20.01.1999 Patentblatt 1999/03**

(73) Patentinhaber: **Lobbe Xenex GmbH**
**D-58642 Iserlohn (DE)**

(72) Erfinder:
- **STRAUS, Reinhold**
**D-74821 Mosbach (DE)**
- **HOHLWECK, Christoph**
**D-58642 Iserlohn (DE)**

(74) Vertreter: **Fuchs Mehler Weiss & Fritzsche**
**Patentanwälte**
**Abraham-Lincoln-Strasse 7**
**65189 Wiesbaden (DE)**

(56) Entgegenhaltungen:
**DE-C- 4 405 303**
**US-A- 4 043 909**
**US-A- 4 079 003**
**US-A- 4 943 165**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 891 305 B1

## Beschreibung

Die Erfindung betrifft ein Verfahren zur Verfestigung von großen Mengen pastöser Massen, wie z.B. Schlämmen, Mooren oder Teeren, bei dem mindestens ein Konditionierungsmittel mit der pastösen Masse vermischt wird. Die Erfindung bezieht sich auch auf eine entsprechende Vorrichtung.

Unter dem Begriff "pastöse Massen" werden außer den beispielhaft aufgezählten Schlämmen, Mooren oder Teeren, auch feuchtes und nasses und insofern nicht tragfähiges Erdreich (Sümpfe) verstanden. Zu den Schlämmen zählen insbesondere Klärschlämme und Papierschlämme. Ferner sind Gewässersedimente, Bohrsuspensionen oder mineralische oder organische Medien dazuzurechnen.

Der Begriff "Konditionierungsmittel" ist als Sammelbegriff für diejenigen Mittel zu verstehen, die für die Verfestigung der jeweils zu behandelnden pastösen Masse geeignet sind. Wenn beispielsweise nicht ausreichend entwässerte Klärschlämme konditioniert werden sollen, so wird man als Konditionierungsmittel Zuschlagstoffe und/oder Bindemittel in Pulver- oder Granulatform verwenden.

Klärschlämme beispielsweise werden in sogenannten Schlammbecken gesammelt und müssen zur Aufbereitung aus dem Schlammbecken mittels eines Baggers ausgehoben und auf einer Vorlage abgelegt werden. Von dort wird das Material zu einer Konditionierungsanlage gebracht, die mit Silo-, Misch-, Dosier- und Transportgerätschaften ausgestattet sein muß. Am Ende der sehr geräte- und personalaufwendigen Behandlungskette wird dann der konditionierte Schlamm auf der Halde abgelegt, wo er ca. zwei Tage lagert. Anschließend muß der so konditionierte Schlamm auf Lastkraftwagen verladen und zu einer Deponie transportiert werden. Der Transport des Schlamms vom Schlammbecken zur Halde erfordert je nach Länge der zurückzulegenden Strecke entsprechend viel Energie und Zeit, so daß die Tagesleistung relativ gering ist. Insgesamt sind zu viele und zu teure Verfahrensschritte erforderlich, so daß nach kostengünstigeren Verfahren gesucht werden muß.

Aus dem Bereich der Sanierung kontaminierter Böden sind unterschiedliche Verfahren bekannt, wobei in der Regel Mikroorganismen und gegebenenfalls die Wirkung der Mikroorganismen unterstützende Nährlösungen in das Erdreich eingebracht werden. So ist beispielsweise aus der DE 44 05 303 ein Bodenbearbeitungsgerät bekannt, das ein Schneid- und Rührwerkzeug mit schräggestellten Flügeln aufweist, wobei es auf eine bestimmte Flügelanordnung ankommt, um eine gewünschte Bodenzerkleinerung zu erzielen.

Aus der DE 40 03 362 C2 ist ein Verfahren und eine Vorrichtung zur in situ- Sanierung kontaminierter Bereiche bekannt, das in Form eines kombinierten Schneid- und Rührwerkzeuges ausgestaltet und in den kontaminierten Boden eindrehbar ist. Zu diesem Zweck ist an einem oberirdisch angeordneten Träger ein drehbares Hohlgestänge vorgesehen, das wenigstens an seinem unteren Ende Schneid- und Mischflügel in Form Schnecken aufweist. Mit diesem Bodenbearbeitungsgerät ist es nicht möglich, über die gesamte zu bearbeitende Bodentiefe Mikroorganismen oder Nährlösungen auszutragen, da im Bereich der Schnecken keine Austrittsöffnungen vorgesehen sind. Diese sind an der Unterseite von separaten Mischflügeln in radialer Richtung nebeneinander angeordnet, so daß die Suspension nach unten abgegeben wird. Außerdem wird durch die schneckenförmigen Schneid- und Mischflügel während der Rotation des Bodenbearbeitungsgerätes ständig Bodenmaterial nach oben und somit gegen die Austrittsöffnungen befördert, wodurch der Austritt der Suspension behindert, wenn nicht sogar unmöglich gemacht wird. Ein weiterer Nachteil besteht darin, daß der zu bearbeitende Boden durch die Schnecken zunächst vollständig nach oben transportiert werden muß und erst dann nach unten fällt, was den Wirkungsgrad des Bodenbearbeitungsgerätes mindert.

Die DE-OS 39 27 418 beschreibt ein Verfahren und eine Vorrichtung zur Reinigung von schadstoffhaltigen Böden, bei dem ohne Transport des Bodens an die Bodenoberfläche eine Auflockerung des Bodengefüges mittels einer unter hohem Druck eingebrachten Flüssigkeit fortschreitend jeweils innerhalb mindestens eines weitgehend zylindrischen Bodenkörpers erfolgt. Außer zur Auflockerung des Bodens dient die Flüssigkeit als Träger und Transportmedium für mindestens einen den jeweiligen Schadstoff an Ort und Stelle abbauenden und/oder umwandelnden Wirkstoff.

In allen Fällen handelt es sich um feste und somit tragfähige Böden, die problemlos mit den jeweiligen Bearbeitungsgeräten befahren werden können, wobei eine Dekontaminierung lediglich in begrenzten oder auch nur lokalen Bereichen durchgeführt werden kann, wobei keine Querverschwenkung und keine Verschiebung des Werkzeuges stattfindet, sondern nur eine punktuelle Bearbeitung in vertikaler Richtung durchgeführt wird.

Die US-A 4 943 165 beschreibt ein Verfahren und eine Vorrichtung zur Verfestigung von Schlämmen in natürlichen oder künstlichen Becken, wobei ein Verfestigungsmittel mittels eines an einem Fahrzeug angebrachten Bodenbearbeitungsgerätes in den Schlamm kontinuierlich eingemischt wird. Die Bodenbearbeitungs- und Mischeinrichtung ist eine Baggerschaufel mit einer geschlitzten Rückwand, wobei die Schaufel vorwärts, rückwärts und senkrecht zur Vorwärtsrichtung bewegt werden kann. Im Innenraum der Baggerschaufel ist ein Verteilerrohr für das Verfestigungsmittel angebracht.

Es ist daher Aufgabe der Erfindung, ein Verfahren bereitzustellen, mit dem große Mengen pastöser Massen auf schnelle und kostengünstige Weise verfestigt werden können. Es ist auch Aufgabe der Erfindung, die entsprechende Vorrichtung zu schaffen, mit der dieses Verfahren durchgeführt werden kann.

Die Erfindung geht von der Erkenntnis aus, daß es nicht notwendig ist, die pastöse Masse, wie z.B. den Schlamm aus dem Schlammbecken zu entfernen und an anderer Stelle aufzubereiten. Das erfindungsgemäße Verfahren sieht vor, daß die in einem natürlichen oder künstlichen Becken befindlichen pastösen Massen an Ort und Stelle (in situ) nacheinander in lokal begrenzten Bereichen in Bewegung gesetzt werden und daß das Konditionierungsmittel über eine vorgegebene Tiefe unter gleichzeitiger Durchmischung mit der pastösen Masse eingetragen wird, wobei das Konditionierungsmittel aus einem außerhalb oder innerhalb des Beckens befindlichen Vorratsbehälters unmittelbar der Bearbeitungsstelle zugeführt wird. Der Mischvorgang mit dem Konditionierungsmittel findet somit im Gelände statt, dessen pastöse Masse nach einer gewissen Reaktionszeit konditioniert und damit soweit verfestigt ist, daß sie befahrbar ist.

Dadurch, daß das Konditionierungsmittel kontinuierlich eingetragen wird, entstehen keine Zeitverluste, wie dies beim Stand der Technik durch das Ausbaggern und Umladen des zu behandelnden Schlamms oder bei der bereits beschriebenen punktuellen Behandlung der Fall ist. Hierbei erfolgt der kontinuierliche Eintrag des Konditionierungsmittels in vertikaler und/oder horizontaler Richtung. Bei dem erfindungsgemäßen Verfahren entfällt die Zwischenlagerung in Silos oder dergleichen, was auch große energetische Vorteile mit sich bringt.

Das Eintragen des Konditionierungsmittels und das Bewegen und Durchmischen der zu behandelnden pastösen Masse wird mittels mindestens einer Vertikalfräse durchgeführt. Eine geeignete Vertikalfräse wird beispielsweise in der DE 4405303 sowie der DE 4405304 beschrieben. Wenn mehrere Vertikalfräsen eingesetzt werden, können diese mit denselben oder mit unterschiedlichen Konditionierungsmitteln arbeiten. Eine solche Vertikalfräse ist in der Regel an einer fahrbaren Einrichtung über geeignete Mittel, wie z.B. einen Ausleger, befestigt. Bei einem großen Gelände ist es erforderlich, daß diese fahrbare Einrichtung über einen bereits trockengelegten Bereich in das Becken hineinfahren kann.

Die Vertikalfräse kann in jeder beliebigen Richtung bewegt werden. Zur Bearbeitung mindestens einer Arbeitsstreifenbreite wird die Vertikalfräse sowohl in Vorwärtsrichtung, d.h. in Fahrtrichtung der fahrbaren Einrichtung, als auch quer zu dieser Vorwärtsrichtung bewegt. Hierbei wird die Vertikalfräse nach links und rechts geschwenkt. Die Bewegung der Vertikalfräse in Vorwärtsrichtung wird erst dann vorgenommen, wenn sich die bereits behandelte pastöse Masse im Traktionsbereich der die Vertikalfräse tragenden fahrbahren Einrichtung so weit verfestigt hat, daß ein Einsinken der fahrbaren Einrichtung verhindert wird. Die Vorschubgeschwindigkeit der Vertikalfräse bzw. der dazugehörigen fahrbaren Einrichtung in Vorwärtsrichtung wird auf die Trocknungszeit der behandelten pastösen Masse und den Abstand der Vertikalfräse von der fahrbaren Einrichtung, d.h. auf die Länge des Auslegers und auf die Schwenkbreite abgestimmt. Da der Mischvorgang der fahrbaren Einrichtung vorgelagert stattfindet, kann davon ausgegangen werden, daß, je größer der Abstand zwischen der fahrbaren Einrichtung und der Vertikalfräse gewählt wird und je größer der realisierbare seitliche Schwenkbereich ist, die eingebrachten Konditionierungsmittel in der pastösen Masse um so länger wirken können. Um so tragfähiger ist dann der Boden, bevor er vom Fahrwerk der fahrbaren Einrichtung überfahren wird.

In Sonderfällen kann die Arbeitsbewegung der Vertikalfräse auch durch Aus- und Einfahren des Auslegers oder durch Verfahren der fahrbaren Einrichtung erreicht werden.

Wenn die Vertikalfräse in Querrichtung bewegt wird, so daß bogenförmige Bereiche des Geländes bearbeitet werden, wird die Vertikalfräse diskontinuierlich in Vorwärtsrichtung bewegt. Wie groß der Schwenkbereich ist, und wie groß der Abstand zur fahrbaren Einrichtung gewählt werden kann, hängt nicht nur von der Art der zu behandelnden pastösen Masse, d.h. dem Grad der Feuchtigkeit ab, sondern auch vom Gewicht der Vertikalfräse. Je größer das Gewicht der Vertikalfräse ist, desto kürzer muß im Hinblick auf Stabilität und Schwenkkraft der Abstand zur fahrbaren Einrichtung gewählt werden. Wenn ein kurzer Abstand aus diesen Gründern erforderlich ist, muß die Vorwärtsgeschwindigkeit entsprechend gedrosselt werden, um sicherzustellen, daß die behandelte pastöse Masse bereits ausreichend abgetrocknet und verfestigt ist. Es kommt deshalb darauf an, möglichst leichtgewichtige Vertikalfräsen zum Einsatz zu bringen, die auch gleichzeitig eine hohe Arbeitsleistung, d.h. einen hohen Grad an Durchmischung bei gleichzeitiger Einbringung einer großen Menge an Konditionierungsmitteln gewährleisten.

Vertikalfräsen können in Bezug auf die Arbeitsbreite in einfacher Ausführung oder auch in mehrfacher Ausführung verwendet werden, je nachdem wie die Befestigungsmittel der Vertikalfräse an der fahrbaren Einrichtung ausgelegt sind und welche Energie in der fahrbaren Einrichtung zum Antrieb und Verschwenken der Vertikalfräsen zur Verfügung steht. Je weniger Vertikalfräsen zum Einsatz kommen, desto geringer ist das Gewicht und um so weiter entfernt kann die Vertikalfräse von der fahrbaren Einrichtung angeordnet sein. Wenn mehrere Vertikalfräsen, z.B. hintereinander laufend eingesetzt werden, so können diese auch unterschiedlich beschickt werden, z.B. mit unterschiedlichen Konditionierungsmitteln und/oder Gas und/oder Aerosolen.

Das Konditionierungsmittel wird vorteilhafterweise in den Raum unter den Mischflügeln der Vertikalfräse in die pastöse Masse gedrückt.

Vorzugsweise werden als Konditionierungsmittel feste und/oder flüssige Mittel verwendet. Es handelt sich hierbei vorteilhafterweise um Mittel zur chemischen oder sorptiven Zehrung des Wassers, Mittel zur Veränderung des Kornspektrums der pastösen Masse, hydraulische und/oder oberflächenaktive Bindemittel oder Mittel, die durch Quellung Flüssigkeit binden. Geeignet sind auch Mittel zur Erhöhung der inneren Reibung. Als Materialien können Tonmineralien in Frage kommen, welche bei Quellung Wasser einbinden, hydraulische Bindemittel wie Kalk oder Zement, Bentonitmehl, Flugasche oder Braunkohlenstaub. Durch die Zugabe des Konditionierungsmittels in die pastöse Masse kann ein exothermer Prozeß ausgelöst werden. Wenn Branntkalk oder Zement hinzugegeben wird, heizt sich die pastöse Masse auf und es entstehen Temperaturen bis zu 70°C und mehr. Man spricht in diesem Fall von Hygienisierung, wobei gleichzeitig auch Bakterien abgetötet werden können. Wenn die Temperatur nicht ausreicht, muß externe Wärme zugeführt werden, so daß auch Temperaturen über 100°C erreicht werden können. Durch die Erwärmung der pastösen Masse wird die Verfestigung beschleunigt, so daß die pastöse Masse bereits kurze Zeit nach Bearbeitung befahrbar ist:

Vorzugsweise wird das Konditionierungsmittel gleichzeitig in verschiedenen Tiefen eingetragen, so daß die pastöse Masse nicht nur im Oberflächenbereich behandelt und trockengelegt wird. Dadurch wird eine große Volumenleistung erzielt sowie eine Konditionierung und Verfestigung bis in große Tiefen sichergestellt.

Es ist auch möglich, unterschiedliche Konditionierungsmittel in unterschiedlichen Tiefen einzutragen. So kann es zweckmäßig sein, in einer oberen Schicht Kalk und in einer unteren Schicht Zement einzubringen, wobei dieses Verfahren nicht auf zwei Schichten beschränkt ist.

Um den Konditionierungssprozeß zu beschleunigen, hat es sich außerdem in einigen Fällen als vorteilhaft herausgestellt, wenn gleichzeitig ein erwärmtes Gas, insbesondere erwärmte Luft, in die pastöse Masse eingetragen wird. Der Reaktionsprozeß des Konditionierungsmittels mit der pastösen Masse wird dadurch insofern positiv beeinflußt als der Verdickungsprozeß früher einsetzt und die Tragfähigkeit der behandelten pastösen Masse in kurzer Zeit so gesteigert wird, daß ein Befahren, z.B. mit Kettenfahrzeugen mit niedrigem Bodendruck bzw. mit Moorlaufwerken möglich ist.

Die Vorrichtung zur Verfestigung von großen Mengen in natürlichen oder künstlichen Becken befindlichen pastösen Massen umfaßt mindestens eine Vertikalfräse zum Einbringen mindestens eines Konditionierungsmittels und zum Durchmischen mit der zu behandelnden pastösen Masse, wobei die Vertikalfräse in Vorwärtsrichtung und quer zur Vorwärtsrichtung bewegbar und zum Einbringen des Konditionierungsmittels über eine vorgegebene Tiefe ausgebildet ist, eine fahrbare Einrichtung und Mittel zum Bewegen und Befestigen der Vertikalfräse an der fahrbaren Einrichtung, sowie Mittel zum Zuführen und zum Bereitstellen des Konditionierungsmittels innerhalb oder außerhalb des Beckens, in dem sich die pastöse Masse befindet.

Die Mittel zum Befestigen und Bewegen der Vertikalfräse sind vorzugsweise ein ausfahrbarer und um mindestens eine vertikale und/oder horizontale Achse schwenkbarer Ausleger. Die fahrbare Einrichtung sollte ein Fahrzeug mit geringem Bodendruck sein, damit möglichst frühzeitig die behandelte pastöse Masse befahren werden kann. Insofern eignen sich insbesondere Baggerfahrzeuge, also Raupenfahrzeuge.

Um herkömmliche Baggerfahrzeuge mit ihren Auslegern verwenden zu können, ist vorzugsweise am freien Ende des Auslegers ein Adapterbauteil vorgesehen, an dem die Vertikalfräse(n) angebracht sind. Die Vertikalfräse(n) kann/können am Adapterteil oder am freien Ende des Auslegers um eine vertikale Achse schwenkbar und bei Bedarf um eine horizontale Achse nach links und rechts schwenkbar angeordnet sein, um die Geräte in die jeweilige Vorschubrichtung auszurichten.

Das Konditionierungsmittel wird in einem Vorratsbehälter mitgeführt, der entweder auf der fahrbaren Einrichtung oder einem der fahrbaren Einrichtung nachgeordneten Silofahrzeug angeordnet ist. Mittels eines Schlauches wird das Konditionierungsmittel der jeweiligen Vertikalfräse zugeführt. Der Vorteil eines separaten Silofahrzeuges besteht darin, daß das Gewicht der fahrbaren Einrichtung nicht durch das Konditionierungsmittel und die entsprechenden Zusatzeinrichtungen erhöht wird, so daß die fahrbare Einrichtung bereits frühzeitig über die behandelte pastöse Masse fahren kann. Je nachdem, mit welchem Fahrwerk das Silofahrzeug ausgestattet ist und welches Gewicht dieses Silofahrzeug aufweist, kann das Silofahrzeug entsprechend weit hinter der Vertikalfräse mitgeführt werden. Da während des Verfestigungsverfahrens die Abmessungen der Vertikalfräse und die Arbeitstiefe konstant bleiben, wird das Mischungsverhältnis in der pastösen Masse über die Vorschubgeschwindigkeit der Vertikalfräse und die Zudosiermenge des Konditionierungsmittels bestimmt.

Die fahrbare Einrichtung weist zur Nutzung der Abwärme des Antriebsaggregates vorzugsweise einen Wärmetauscher mit Gebläse auf, der über einen Schlauch mit der Vertikalfräse verbunden ist. Auf diese Weise kann beispielsweise Warmluft gleichzeitig mit dem Konditionierungsmittel in die pastöse Masse eingetragen werden, was den Trocknungsprozeß erheblich beschleunigt. Der Schlauch für den Transport der Wärme ist vorteilhafterweise mit dem Schlauch für den Transport des Konditionierungsmittels zusammengeführt, so daß letztendlich nur ein Schlauch an der jeweiligen Vertikalfräse endet.

Wenn beispielsweise klebrige Stoffe wie Teer verfestigt werden sollen, ist es von Vorteil, wenn die Vertikalfräse beheizbare Werkzeuge aufweist, die dann dafür sorgen, daß das am Werkzeug festgeklebte Material abschmilzt.

Für die Fälle, daß die Trocknung der pastösen Masse nur langsam voranschreitet oder, daß die Vertikalfräse so schwer ist, daß nur ein kurzer Abstand zur fahrbaren Einrichtung realisiert werden kann, oder in den Fällen, in denen die fahrbare Einrichtung ein großes Gewicht aufweist, kann es empfehlenswert sein, zwischen der fahrbaren Einrichtung und der Vertikalfräse eine Einrichtung zur Verlegung von Trageplatten vorzusehen. Auf diese Art und Weise kann der Bodendruck erheblich verringert werden, so daß auch Fahrzeuge z. B. mit Radantrieb eingesetzt werden können.

Da es sich beim Konditionierungsbetrieb um einen leistungsintensiven Einsatz handelt, kann die Notwendigkeit bestehen, an der fahrbaren Einrichtung, vorzugsweise am Heck der fahrbaren Einrichtung oder an einer anderen geeigneten Stelle ein Zusatzmotor, beispielsweise mit Hydropumpe bzw. Stromerzeuger, zu installieren, der leistungsmäßig der Vertikalfräse bei Bedarf in Addition zum Antrieb der fahrbaren Einrichtung zugeschaltet werden kann. Da an der fahrbaren Einrichtung meist der der Vertikalfräse abgewandten Seite ein Gegengewicht vorhanden ist, kann der Zusatzmotor dort beispielsweise über Zentrierzapfen und Verschraubungen befestigt werden.

Beispielhafte Ausführungsformen der Erfindung werden nachfolgend anhand der Zeichnungen näher erläutert. Es zeigen:

| | |
|---|---|
| Figur 1 | die Draufsicht auf ein zu verfestigendes Gelände mit Vertikalfräse, fahrbarer Einrichtung und Silofahrzeug, |
| Figur 2 | die Seitenansicht der in Figur 1 gezeigten Vorrichtung, |
| Figur 3 | die Seitenansicht einer Vorrichtung gemäß einer weiteren Ausführungsform, |
| Figur 4 | eine Seitenansicht, teilweise im Schnitt, einer Vertikalfräse, |
| Figur 5 | die Anordnung von zwei Vertikalfräsen in Seitenansicht, |
| Figur 6 und 7 | die Draufsicht auf die Anordnung zweier Vertikalfräsen, |
| Figur 8 | schematische Darstellung eines zu verfestigenden Geländes, |
| Figur 9 | eine Draufsicht auf das in Figur 10 dargestellte Gelände, |
| Figur 10 und 11 | eine Vertikalfräse gemäß einer weiteren Ausführungsform. |

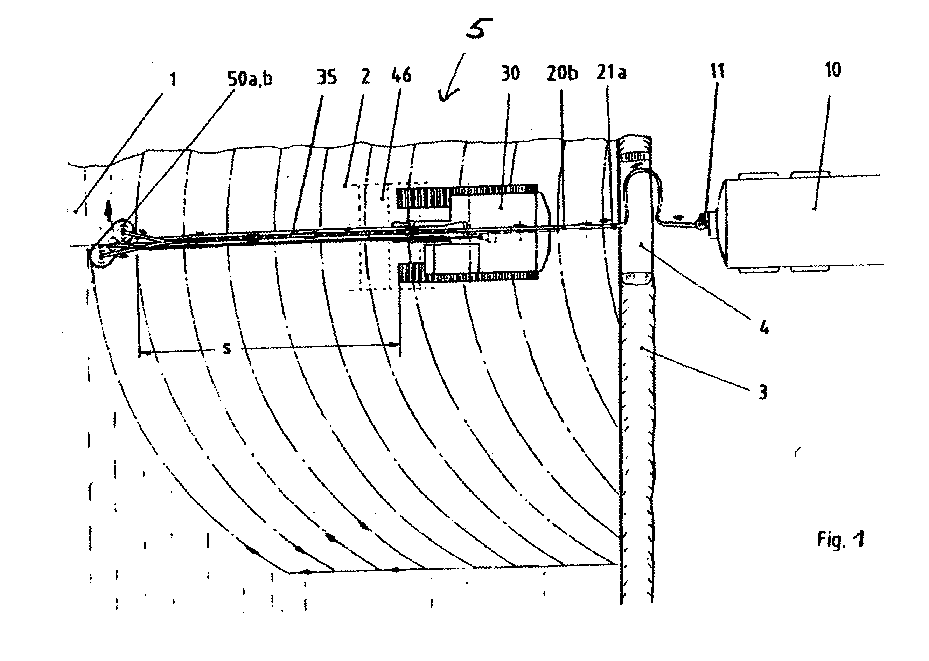

In der Figur 1 ist die Draufsicht auf ein zu verfestigendes Gelände dargestellt. Es handelt sich hierbei um ein Schlammbecken 5, das mit zu bearbeitendem Schlamm 1 gefüllt ist und mittels eines Damms 3 abgegrenzt ist, in dem eine Einfahrt 4 vorgesehen ist, durch die ein Baggerfahrzeug 30 in das Schlammbecken einfahren kann. Bevor das Baggerfahrzeug 30 jedoch in den Bereich des Schlammbeckens einfahren kann, muß dort bereits eine Behandlung des Schlamms 1 stattgefunden haben, damit sich der Schlamm bereits verfestigt hat (verfestigter Schlamm 2).

Das Baggerfahrzeug 30 besitzt einen Ausleger 35, an dessen vorderen Ende in der hier gezeigten Darstellung zwei Vertikalfräsen 50a,b angeordnet sind. Der Ausleger 35 ist um eine vertikale Achse am Baggerfahrzeug 30 schwenkbar angeordnet, so daß der unbearbeitete Schlamm 1 mittels Schwenkbewegungen der Vertikalfräse in bogenförmigen Streifen bearbeitet werden kann. Das Konditionierungsmittel befindet sich in einem Silofahrzeug 10, aus dem es über die Schlauchleitung 20a,b, über das Baggerfahrzeug 30 und den Ausleger 35 den Vertikalfräsen 50a,b zugeführt wird.

Zunächst wird die fahrbare Einrichtung 30 außerhalb des Schlammbeckens positioniert und die Bearbeitung vom Bereich des Damms 3 aus vorgenommen. Hierbei wird das Baggerfahrzeug 30 immer dann in Fahrtrichtung weiterbewegt, wenn ein bogenförmiger Bereich des unbearbeiteten Schlamms bearbeitet worden ist, und der Verfestigungsvorgang abgeschlossen ist. Das Baggerfahrzeug 30 wird dann um eine Streifenbreite vorwärtsbewegt und der Ausleger 35 wiederum verschwenkt. Hierbei wird das Silofahrzeug 10 entsprechend nachgeführt. Wenn die Länge s zwischen fahrbarer Einrichtung und Vertikalfräse auf die Trocknungszeit des Schlamms 1 abgestimmt ist, kann das Baggerfahrzeug 30 auf den bearbeiteten und trockengelegten Schlamm 2 auffahren, ohne einzusinken.

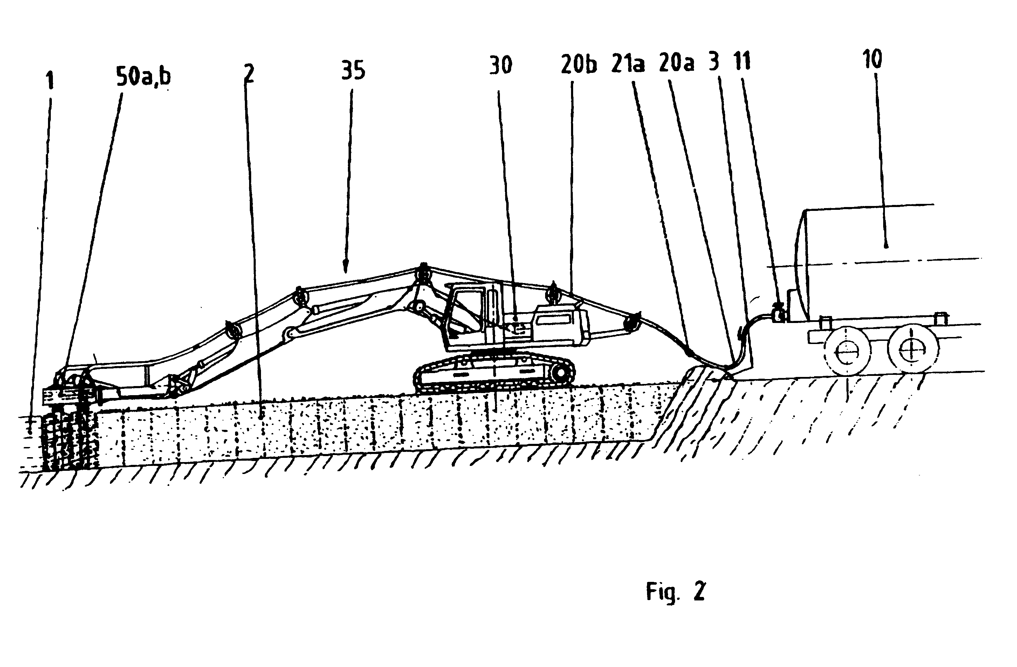

In der Figur 2 ist die in Figur 1 gezeigte Vorrichtung in Seitenansicht dargestellt. Das Silofahrzeug 10 weist eine Gebläseeinrichtung 11 auf, mittels derer das Konditionierungsmittel in die Schlauchleitung 20a, b eingeblasen wird. Die einzelnen Schlauchabschnitte 20a,b sind über Kupplungsstücke 21a,b miteinander verbunden. Der Schlauchabschnitt 20b wird über Rollen über das Baggerfahrzeug 30 und über den Ausleger 35 geführt und mit entsprechenden Blasrohren, die noch beschrieben werden, verbunden, die in die Vertikalfräsen 50a,b münden.

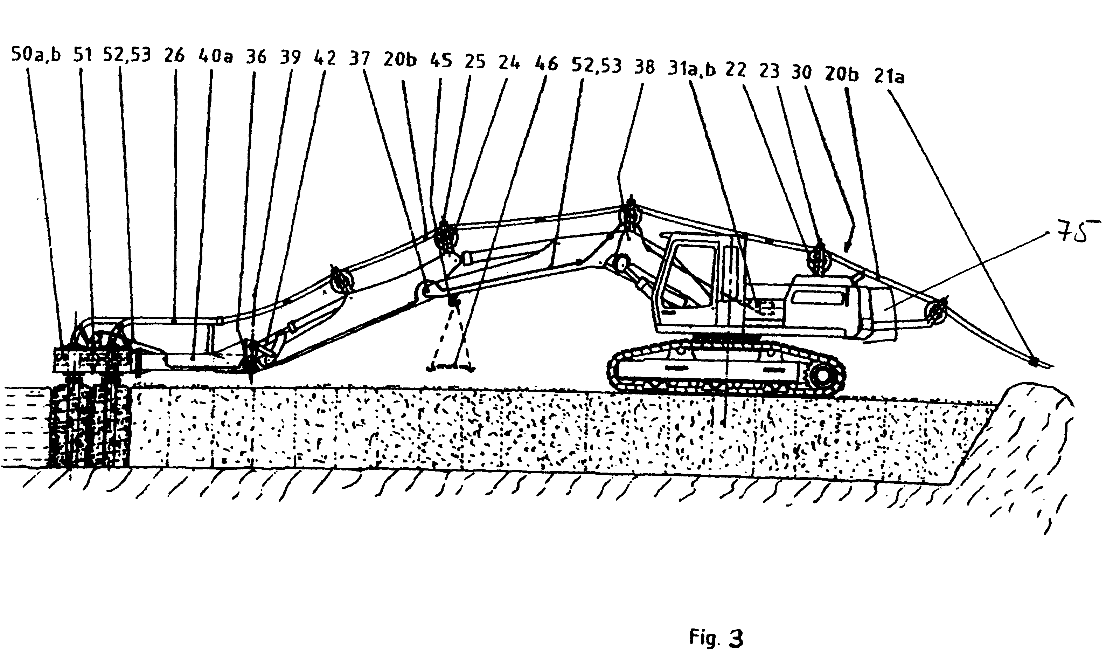

In der Figur 3 ist die in Figur 2 gezeigte Vorrichtung detaillierter dargestellt. Der Schlauch 20b wird über Rollen 22, 24 und entsprechende Sicherungen 23, 25 geführt und mündet in ein Verteilerrohr 26 mit den beiden Blasrohren 27, 28, dessen Enden in die Hohlwellen 54a,b der Vertikalfräsen 50a,b münden. Die Rollen 22, 24, die vornehmlich in den Knickpunkten des Auslegers 35 angeordnet sind, mit den dazugehörigen Sicherungen gewährleisten ein verspannungsfreies Abrollen des Schlauches 20b bei den verschiedenen Auslegerwegungen und verhindern ein Ausrasten des Schlauches.

Aufgrund der stufenlosen Regelbarkeit der beiden Hydraulikpumpen 31a,b des Baggerfahrzeuges 30 kann die Fräsendrehzahl sowie die Schwenkgeschwindigkeit des Auslegers stufenlos geregelt werden, was optimale Anpassungsmöglichkeiten im praktischen Einsatz zur Folge hat.

Für den Fall, daß der Antrieb des Baggerfahrzeugs 30 für den Betrieb der Vertikalfräsen nicht ausreichen sollte, ist am Heck des Baggerfahrzeugs ein Zusatzmotor 75 angeordnet.

Die Energieübertragung zum Hydraulikmotor 51 wird unter Verwendung der Hydraulikzulauf- und Rücklaufleitung 52, 53 vorgenommen. Die Leitungsführung erfolgt so an den Hauptdrehpunkten 36, 37, 38 vorbei, daß die Leitungen an keiner Stelle überbeansprucht werden. Anstelle eines Hydroantriebs kann die Vertikalfräse auch einen elektrischen Antrieb aufweisen, der über die Stromquelle des Baggerfahrzeugs 30 stufenlos angetrieben werden kann.

Am vorderen Ende des Auslegers 35 ist eine Schnittstelle 39 vorgesehen, an der ein Adapterbauteil 40a angeordnet ist. Dieses Adapterbauteil 40a, das sowohl das Verteilerrohr 26 als auch die beiden Vertikalfräsen 50a,b sowie den Hydromotor 51 zum Antrieb der Vertikalfräsen trägt, wird an dem Ausleger 35 befestigt und das Verteilerrohr 26 wird mit dem Schlauchabschnitt 20b verbunden. Auf diese Art und Weise ist es möglich, herkömmliche Baggerfahrzeuge mit Auslegern zu verwenden und an diesen lediglich die gewünschte Vertikalfräse anzubringen, weil die Anpassungsmodalitäten ausschließlich in das Adapterbauteil hineinverlagert werden.

Für den Fall, daß der behandelte Schlamm 2 noch keine ausreichende Festigkeit hat, ist am Ausleger 35 an einem Transporthaken 45 eine Einrichtung zum Verlegen von Trageplatten 46 vorgesehen, die bei Bedarf vor dem Baggerfahrzeug 30 in der Fahrspur abgelegt werden können.

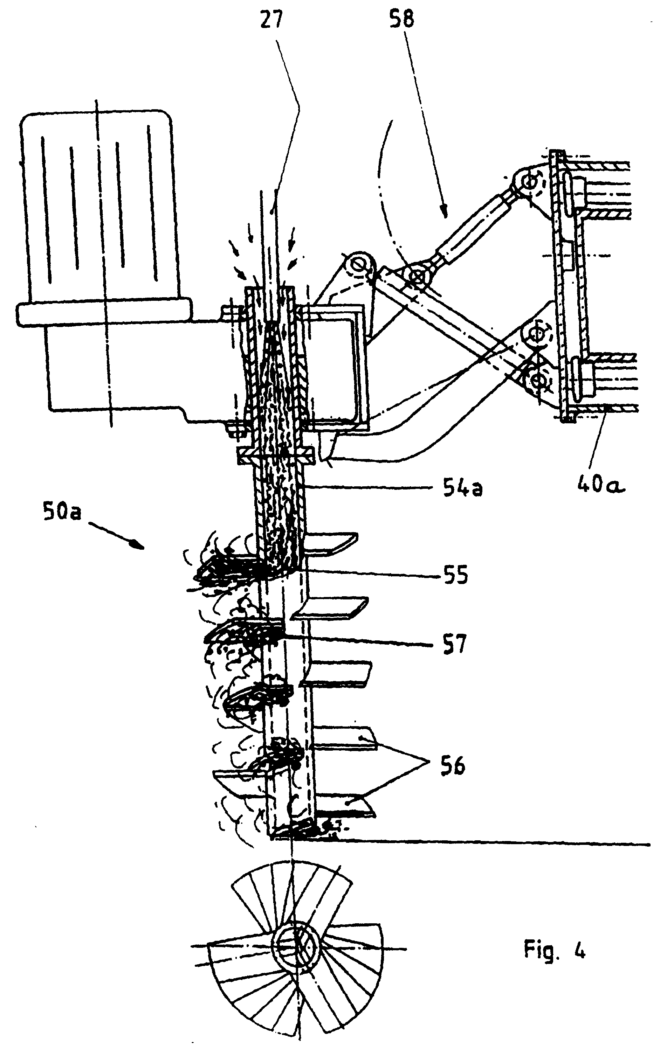

In der Figur 4 ist eine Vertikalfräse 50a vergrößert dargestellt. An einer Hohlwelle 54a sind Mischflügel 56 angeordnet, die derart ausgerichtet sind, daß der Schlamm während der Rotation der Hohlwelle über die Mischflügel 56 angehoben wird und hinter diesen sich wieder nach unten bewegt. In die Hohlwelle 54a wird das Blasrohr 27 eingeführt, durch das das Konditionierungsmittel in das Innere der Hohlwelle 54a eingeleitet wird. Dieses Konditionierungsmittel kann mit erwärmter Luft versetzt sein. Gleichzeitig kann zwischen dem Blasrohr 27 und der Hohlwelle 54a ein ringförmiger Freiraum bestehen, so daß zusätzlich Außenluft in das Innere der Hohlwelle 54a eingesogen wird. Innerhalb der Hohlwelle 54a sind Leitbleche 55 vorgesehen, um das einströmende Konditionierungsmittel radial nach außen in Richtung der unter den Mischflügeln 56 vorgesehenen Austrittsöffnungen 57 umzulenken, wo das Konditionierungsmittel in den Raum unterhalb der Mischflügel 56 in den zu behandelnden Schlamm ausgetragen wird. Die Vertikalfräse 50a ist über eine Verstelleinrichtung 58, mit der eine Verschwenkung um eine horizontale Achse möglich ist, an dem Adapterbauteil 40a befestigt.

Für den Fall, daß eine klebrige pastöse Masse behandelt werden soll, können die Mischflügel 56 beheizbar ausgebildet sein.

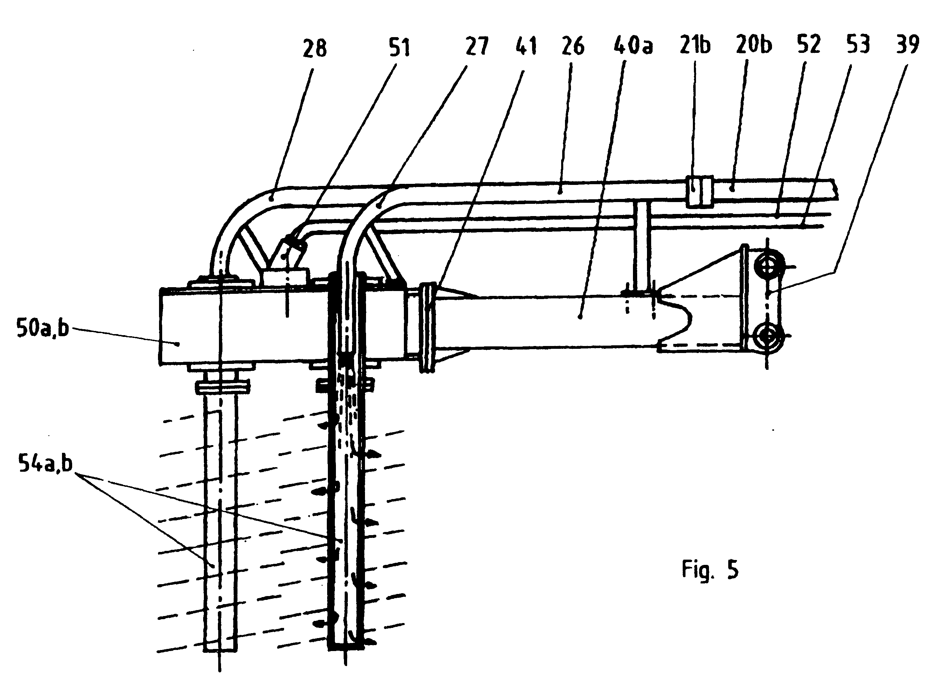

In der Figur 5 sind zwei Vertikalfräsen 50a,b nebeneinander angeordnet, die von einem gemeinsamen Hydromotor 51 angetrieben werden. Der Hydromotor 51 ist mittels einer Flanschverbindung 41 an dem Adapterbauteil 40a befestigt, das an der Schnittstelle 39 am Ausleger 35 der fahrbahren Einrichtung befestigt werden kann. Die beiden Vertikalfräsen 50a,b sind derart beabstandet angeordnet, daß sich die an den Hohlwellen 54a,b angeordneten Mischflügel nicht berühren. Es ist deutlich zu sehen, daß das Verteilerrohr 26, das über eine Kupplung 21b an dem Schlauchabschnitt 20b befestigt ist, sich in zwei Blasrohre 27 und 28 aufteilt, die in das Innere der Hohlwellen 54a,b einmünden.

Zur Beschleunigung des Verfestigungsvorganges besteht ferner die Möglichkeit, die Abwärmeenergie der Auspuffgase mit Hilfe eines Abgas-Luft-Wärmetauschers mit Gebläse in der Form zu nutzen, daß die so erzeugte Warmluft zusammen mit dem Zuschlagstoff und oder Bindemittel-Förderstrom der Leitung 20b oder getrennt in die Hohlwellen der Vertikalfräse eingeblasen wird. Zusätzlich kann noch über diesem Weg zerstäubte Intensivatorflüssigkeit mit eingeblasen werden. Dies kann ebenfalls gemeinsam oder getrennt erfolgen. Z.B. könnten auch die beiden Vertikalfräsen hintereinander laufend unterschiedlich beschickt werden, wobei eine mit Luft und Zuschlagstoffen und/oder Bindemitteln und die andere mit gewärmter Luft und Aerosolen versorgt wird.

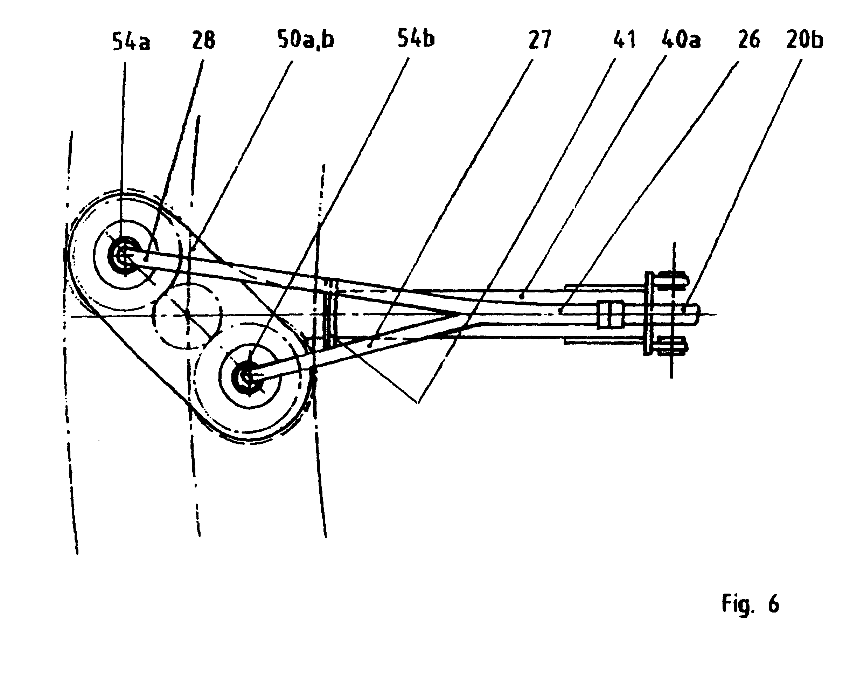

In der Figur 6 ist die Draufsicht auf die in Figur 5 gezeigte Anordnung zweier Vertikalfräsen 50a,b dargestellt. Damit aufgrund der Verschwenkbarkeit des Auslegers 35 zwei streifenförmige bogenförmige Bereiche bearbeitet werden können, sind die beiden Vertikalfräsen 50a,b versetzt zueinander angeordnet. Das Verteilerrohr 26 für die Zuführung des Konditionierungsmittels verzweigt sich in zwei unterschiedlich lange Blasrohre 27 und 28.

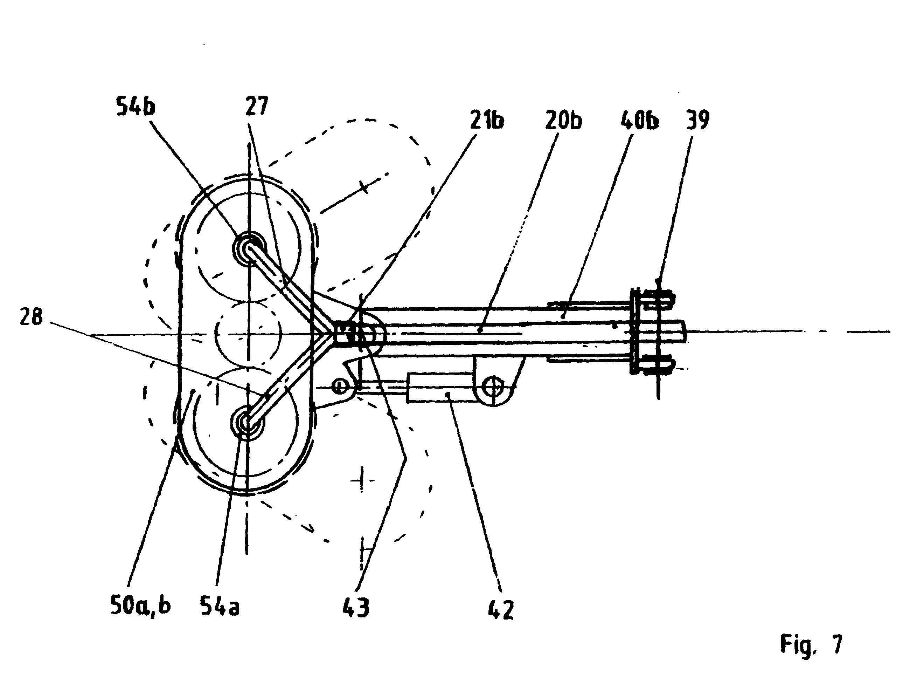

Das Gesamtkonzept und die Verstellbarkeit der einzelnen Auslegerbaugruppen ist so ausgelegt, daß eine Bearbeitung bzw. Bodenstabilisierung auch an Steigungen, Hängen oder z.B. längs von Böschungen bzw. von Dämmen in das Becken hinein erfolgen kann. Um bei z.B. räumlich beengten Verhältnissen oder sonstigen Gründen mit der beschriebenen Vorrichtung auch im Fahrbetrieb bzw. Auslegerein- und Ausfahrbetrieb arbeiten zu können, ist es sinnvoll, zur Sicherung der Arbeitsbreite und Überdeckung der einzelnen Zeilen der Fräse 50a,b gemäß Figur 7 zu verfahren. Hier kann um eine vertikale Achse 43 mit Hilfe eines Hydraulikzylinders 42 die Mehrfach-Vertikalfräse 50a,b nach links und recht geschwenkt werden, so daß auch bei der 2-fach bzw. Mehrfach-Vertikalfräse allen Fahrmanipulationen Rechnung getragen werden kann.

Um die Verschwenkung herbeizuführen, ist der Hydraulikzylinder 42 einerseits am Adapterbauteil 40b und andererseits an den Vertikalfräsen 50a,b angelenkt. Die beiden Blasrohre 27, 28 sind in dieser Ausführungsform gleich lang ausgebildet und über eine Drehkupplung mit dem Schlauch 20b verbunden.

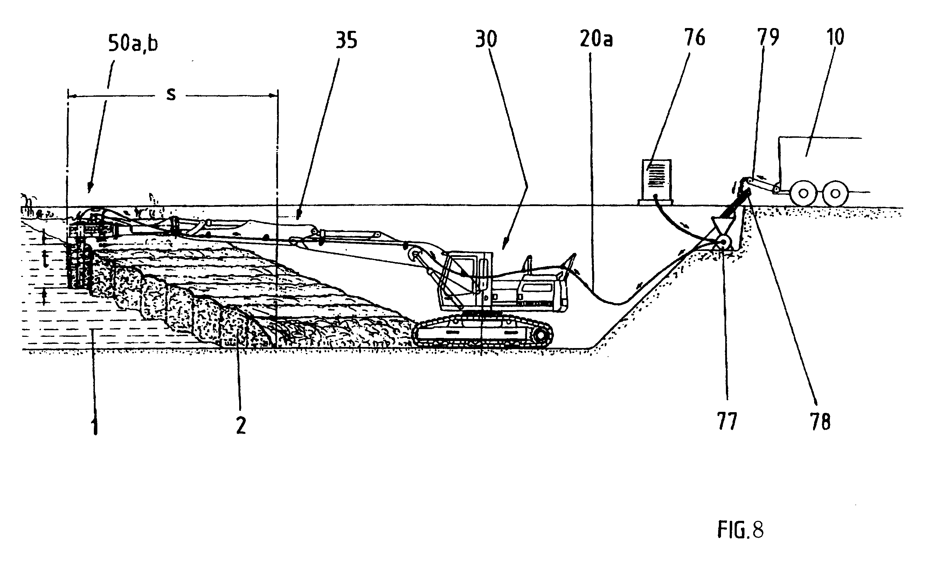

Sind bestimmte Geländeabschnitte mit Großsilowagen nicht zugänglich, dann müssen geländegängige Silofahrzeuge 10 entsprechend Figur 8 mit Förderband 79, Schnecke oder Kratzförderer eingesetzt werden, die das Konditionierungsmittel meist über eine Rutsche 78 einer Zellradschleuse 77 dosiert zuführen. Von dort erfolgt dann die Übergabe an den Luftstrom, der durch ein Hochleistungsgebläse 76 erzeugt wird und das Konditionierungsmittel über einen Förderschlauch 20a den Vertikalfräsen 50a,b zuführt.

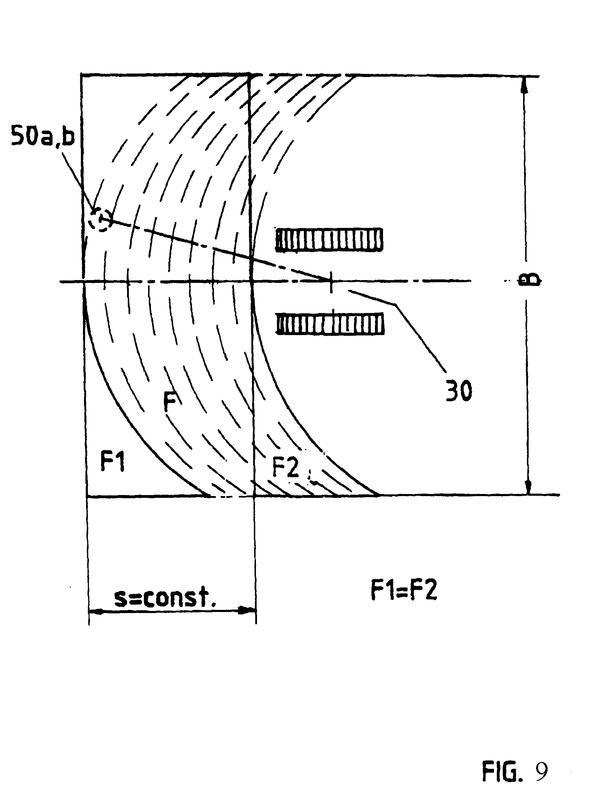

Die in Figur 8 gezeigte Arbeitsweise hat den Vorteil, daß das Baggerfahrzeug 30 auf dem festen Untergrund des Schlammbeckens stehen kann. Durch den schrägen Abbau ergibt sich ferner für den Fahrer eine gute Übersicht über die Arbeitsfläche. Um das vorgeschriebene Mischungsverhältnis an Konditionierungsmittel zu erhalten, braucht der Fahrer nur die vorgeschriebene Arbeitsbreite gemäß Beschreibung der Figur 9 einzuhalten. Alle anderen Grenzwerte ergeben sich automatisch.

Kann das Silofahrzeug 10, wie es beispielsweise in den Figuren 1 bis 3 beschrieben wird, in das Becken bis zum Baggerfahrzeug 30 einfahren, dann kann die weitere Bearbeitung des Schlamms wie im Zusammenhang mit den Figuren 1 bis 3 beschrieben wurde, stattfinden.

Bei relativ dünnflüssigen Schlämmen kann bei einer Vorgehensweise gemäß Figur 8 bzw. durch gezielte Konditionierung ein Staukörper erzeugt werden, der das Fließen des Schlammes in Richtung Baggerfahrzeug verhindert bzw. verzögert.

Zur möglichst einfachen Anwendung des Verfestigungsverfahrens ist für den Fahrer bei der Ermittlung der prozentualen Zumischung folgende Vorgehensweise möglich. Nach der Positionierung des Baggerfahrzeugs 30 gemäß Figur 8 und 9 kann von folgenden Verhältnissen ausgegangen werden. Bei der Ermittlung der Fläche F kann, da der Ausleger 35 nur eine bestimmte Auslage zuläßt, das Maß s als Konstante zugrundegelegt werden. Die Eintauchtiefe t der Vertikalfräse bleibt ebenfalls konstant. Da das Konditionierungsmittel immer mit Silofahrzeugen 10 gleichen Behältervolumens angefahren wird, kann auch hier eine Konstante zugrundegelegt werden.

Für die folgenden Ermittlungen gilt beispielsweise:

- V = Bodenvolumen vor der Konditionierung ($m^3$)
- V1 = Volumen des Konditionierungsmittels im Transportfahrzeug = konst. ($m^3$); beispielsweise 28 $m^3$
- V2 = Volumen des konditionierten Schlammes ($m^3$)
- S = Überdeckung des Auslegers = konst. (m) = z.B. 10 m
- F = konditionierte Fläche ($m^2$)
- F1 = F2 Begründung der Rechteckformel
- t = Konditionierungstiefe = konst. (m) = z.B. 1,5 m
- B = Schwenkbreite des Baggers (m) variabel
- Zm = Zumischung in % zu V2

$$V2 = V + V1 = S \cdot B \cdot t = 100\% \qquad V2 = \frac{V1}{Zm} \cdot 100$$

Stellt man die Formel nach B um, so erhält man

$$B = \frac{V2}{1{,}5 \cdot 10} = \frac{V2}{15}$$

und legt man ein Transportfahrzeug von 28 $m^3$ zugrunde, dann ergibt sich für den Fahrer eine Tabelle, mit deren Hilfe er die üblichen Zumischungsverhältnisse lediglich durch Anpassung der Arbeitsbreite erreicht.

| Mischung Zm in Vol. % | Arbeitsbreite in m |
|---|---|
| 8 | 23,3 |
| 9 | 20,7 |
| 10 | 18,6 |
| 11 | 16,9 |
| 12 | 15,5 |
| 13 | 14,3 |

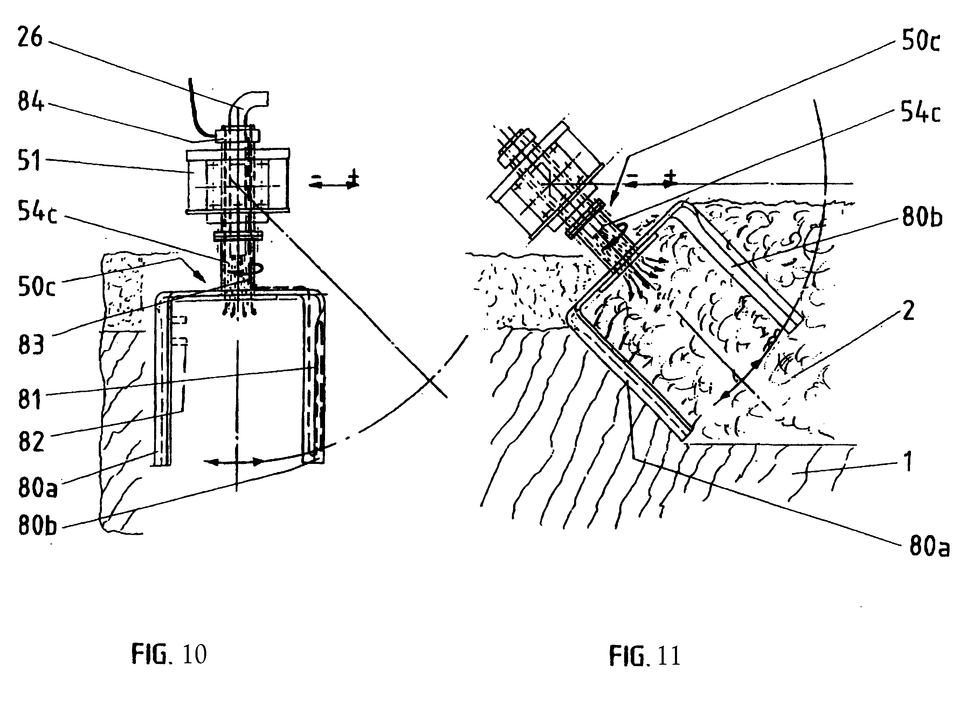

Wenn die Verfestigung von Teer oder die Verfestigung von zur Verstopfung und Verklebung neigenden pastösen Massen durchgeführt werden soll, empfiehlt es sich, eine in den Figuren 10 und 11 dargestellte Vertikalfräse 50c einzusetzen. Ein solches Gerät ist im Prinzip aus der DE 44 05 304 C1 bekannt. Eine solche Vertikalfräse 50c besitzt mindestens zwei im wesentlichen senkrecht nach unten weisende Schwerter 80a,b, die bei Bedarf im Inneren mit einer Heizung 81 versehen sind. Die Stromzuführung erfolgt über eine Stromleitung 83 und eine Drehdurchführung 84 durch die Hohlwelle 54c. Oberhalb der beiden Schwerter 80a,b befindet sich der Antrieb 51. An den Schwertern 80a,b können zusätzlich noch Mischflügel 82 angeordnet sein. Das Konditionierungsmittel wird von oben durch die Hohlwelle 54c zugeführt.

Um die Vermischung zu optimieren, empfiehlt es sich, gemäß der Figur 11 die Vertikalfräse um ca. 45° seitlich zu kippen und gleichzeitig einen angepaßten Vorschub in Plus- oder Minusrichtung freizugeben. Dann greifen die Schwerter 80a,b in ständigem Wechsel von unten nach oben bzw. oben nach unten bewegend in die pastöse Masse 1 ein und vermischen die Ober- mit der Unterschicht. Gleichzeitig ist es möglich, über die Hohlwelle und dem Zulaufrohr das Konditionierungsmittel in das Zentrum der Vertikalfräse 50c einzublasen, welches dann ebenfalls mit vermischt wird.

**Bezugszeichen:**

| | |
|---|---|
| 1 | pastöse Masse, unbearbeiteter Schlamm |
| 2 | behandelte Masse, trockengelegter Schlamm |
| 3 | Damm |
| 4 | Einfahrt |
| 5 | Becken |
| 10 | Silofahrzeug |
| 11 | Gebläseeinrichtung |
| 20a,b | Schlauchleitung |
| 21a,b | Kupplungsstück |
| 22 | Rolle |
| 23 | Sicherung |
| 24 | Rolle |
| 25 | Sicherung |
| 26 | Verteilerrohr |
| 27 | Blasrohr |
| 28 | Blasrohr |
| 29 | Umstellventil |
| 30 | Baggerfahrzeug |
| 31a,b | Hydropumpe |
| 35 | Ausleger |
| 36 | Hauptdrehpunkt |
| 37 | Hauptdrehpunkt |
| 38 | Hauptdrehpunkt |
| 39 | Schnittstelle |
| 40a,b | Adapterbauteil |
| 41 | Flanschverbindung |
| 42 | Hydraulikzylinder |
| 43 | vertikale Achse |
| 45 | Transporthaken |
| 46 | Trageplatte |
| 50a,b ,c | Vertikalfräse |
| 51 | Hydromotor |
| 52 | Hydraulikölzulauf |
| 53 | Hydraulikölrücklauf |
| 54a,b,c | Hohlwelle |
| 55 | Leitblech |
| 56 | Mischflügel |
| 57 | Austrittsöffnung |
| 58 | Verstell- und Befestigungseinrichtung |
| 70 | Horizontalfräse |
| 71 | drehrichtungsunabhängige Werkzeuge |
| 72 | Hydromotor |
| 73 | Blasrohr |
| 74 | Blasrohr |
| 75 | Zusatzmotor |
| 76 | Gebläse |
| 77 | Zellradschleuse |
| 78 | Rutsche |
| 79 | Förderband |
| 80a,b | Schwert |
| 81 | Heizung |
| 82 | Mischflügel |
| 83 | Stromleitung |
| 84 | Drehdurchführung |

**Patentansprüche**

**1.** Verfahren zur Verfestigung von großen Mengen pastöser Massen, wie z.B. Schlämmen, Mooren oder Teeren, wobei die in einem natürlichen oder künstlichen Becken befindlichen pastösen Massen an Ort und Stelle nacheinander in lokal begrenzten Bereichen in Bewegung gesetzt werden und mindestens ein Konditionierungsmittel unter gleichzeitiger Durchmischung mit der pastösen Masse eingetragen wird, wobei das Konditionierungsmittel aus einem außerhalb oder innerhalb des Beckens befindlichen Vorratsbehälter unmittelbar der Bearbeitungsstelle zugeführt wird, wobei das Konditionierungsmittel mittels mindestens einer Vertikalfräse unterhalb der Oberfläche der pastösen Masse eingetragen und über eine vorgegebene Tiefe kontinuierlich sowohl in vertikaler als auch horizontaler Richtung gleichmäßig verteilt wird, und die Vertikalfräse in Vorwärtsrichtung und senkrecht zur Vorwärtsrichtung bewegt wird.

**2.** Verfahren nach Anspruch 1, **dadurch gekennzeichnet**, daß als Konditionierungsmittel feste und/oder flüssige Mittel verwendet werden.

**3.** Verfahren nach Anspruch 1 oder 2, **dadurch gekennzeichnet**, daß das Konditionierungsmittel Mittel zur chemischen oder sorptiven Zehrung des Wassers, Mittel zur Veränderung des Kornspektrums der pastösen Masse, hydraulische und/oder oberflächenaktive Bindemittel oder Mittel, die durch Quellung Flüssigkeit binden, verwendet werden.

**4.** Verfahren nach einem der Ansprüche 1 bis 3, **dadurch gekennzeichnet**. daß das Konditionierungsmittel gleichzeitig in verschiedenen Tiefen eingetragen wird.

**5.** Verfahren nach einem der Ansprüche 1 bis 4, **dadurch gekennzeichnet**, daß in verschiedenen Tiefen der pastösen Massen jeweils unterschiedliche Konditionierungsmittel eingetragen werden.

**6.** Verfahren nach einem der Ansprüche 1 bis 5, **dadurch gekennzeichnet**. daß während der Verfestigung die pastöse Masse erwärmt wird.

**7.** Verfahren nach Anspruch 6, **dadurch gekennzeichnet**, daß zusammen mit dem Konditionierungsmittel erwärmtes Gas, insbesondere Luft, in die pastöse Masse eingetragen wird.

**8.** Verfahren nach einem der Ansprüche 1 bis 5, **dadurch gekennzeichnet**, daß ein exotherm wirkendes Konditionierungsmittel verwendet wird.

**9.** Verfahren nach einem der Ansprüche 1 bis 8, **dadurch gekennzeichnet**, daß die Vorschubgeschwindigkeit der fahrbaren Einrichtung der Vertikalfräse in Vorwärtsrichrung auf die Trocknungszeit der pastösen Masse und den Abstand der Vertikalfräse von der fahrbaren Einrichtung abgestimmt wird.

**10.** Vorrichtung zur Verfestigung von großen Mengen in natürlichen oder künstlichen Becken befindlicher pastöser Massen, wie z.B. Schlämmen, Mooren oder Teeren, mit

- mindestens einer Vertikalfräse (50a,b,c) zum Durchmischen mindestens eines Konditionierungsmittels mit der zu behandelnden pastösen Masse (1), wobei die Vertikalfräse (50a,b, c) in Vorwärtsrichtung und quer zur Vorwärtsrichtung bewegbar und zum Einbringen des Konditionierungsmittels über eine vorgegebene Tiefe ausgebildet ist,

- Mittel zum Bewegen und Befestigen der Vertikalfräse an einer fahrbaren Einrichtung (30) und

- Mittel zum Zuführen und zum Bereitstellen des Konditionierungsmittels innerhalb oder außerhalb des Beckens, in dem sich die pastöse Masse befindet.

**11.** Vorrichtung nach Anspruch 10, **dadurch gekennzeichnet**, daß die Mittel zum Befestigen und Bewegen der Vertikalfräse (50a,b,c) ein ausfahrbarer und um mindestens eine vertikale und/oder um eine horizontale Achse schwenkbarer Ausleger (35) ist.

**12.** Vorrichtung nach Anspruch 10 oder 11, **dadurch gekennzeichnet**, daß die fahrbare Einrichtung (30) ein Fahrzeug mit geringem Bodendruck ist.

**13.** Vorichtung nach Anspruch 12, **dadurch gekennzeichnet**, daß das Fahrzeug ein Baggerfahrzeug (30) ist, das an seinem freien Ende seines Auslegers (35) ein Adapterbauteil (40a,b) zur Anbringung der Vertikalfräse (50a,b,c) aufweist.

**14.** Vorrichtung nach einem der Ansprüche 10 bis 13, **dadurch gekennzeichnet**, daß die Vertikalfräse (50a,b,c) am Adapterbauteil (40a,b) oder am freien Ende des Auslegers (35) um eine vertikale Achse schwenkbar angeordnet ist.

**15.** Vorrichtung nach einem der Ansprüche 10 bis 14, **dadurch gekennzeichnet**, daß die Vertikalfräse (50a,b,c) beheizbare Werkzeuge (56,80) aufweist.

**16.** Vorrichtung nach einem der Ansprüche 10 bis 15, **dadurch gekennzeichnet**, daß die Vertikalfräse (50a,b,c) mindestens zwei ineinandergesteckte Hohlwellen zum Zuführen von unterschiedlichen Konditionierungsmitteln in unterschiedlichen Tiefen aufweist.

**17.** Vorrichtung nach einem der Ansprüche 10 bis 16, **dadurch gekennzeichnet**, daß die fahrbare Einrichtung (30) zur Nutzung der Abwärme des Antriebsaggregates einen Wärmetauscher mit Gebläse aufweist, der über einen Schlauch mit der Vertikalfräse (50a,b,c) verbunden ist.

**18.** Vorrichtung nach Anspruch 17, **dadurch gekennzeichnet**, daß der Schlauch für den Transport der Wärme mit dem Schlauch (20a,b) für den Transport des Konditionierungsmittels zusammengeführt ist.

**19.** Vorrichtung nach einem der Ansprüche 10 bis 18, **dadurch gekennzeichnet**, daß zwischen der fahrbaren Einrichtung (30) und der Vertikalfräse (50a, b,c) eine Einrichtung zur Verlegung von Trageplatten (46) vorgesehen ist.

**20.** Vorrichtung nach einem der Ansprüche 10 bis 19, **dadurch gekennzeichnet**, daß an der fahrbaren Einrichtung (30) ein Zusatzmotor (75) vorgesehen ist.

## Claims

**1.** Process for the consolidation of large quantities of paste-like masses, e.g. sludges, bogs or tars, wherein the paste-like masses situated in a natural or artificial basin are successively set moving in locally limited regions in situ and at least one conditioning medium is introduced into and simultaneously thoroughly mixed with the paste-like mass, wherein the conditioning medium is supplied directly to the treatment site from a reservoir located outside or inside the basin, wherein the conditioning medium is introduced beneath the surface of the paste-like mass and continuously both in a vertical and a horizontal direction uniformly distributed over a given depth by means of at least one vertical rotary cultivator, and the vertical rotary cultivator is moved in a forward direction and perpendicularly to the forward direction.

**2.** Process according to claim 1, **characterised in that** solid and/or liquid media are used as conditioning medium.

**3.** Process according to claim 1 or 2, **characterised in that** agents which chemically or sorptively extract the water, agents which change the particle spectrum of the paste-like mass, hydraulic and/or surface-active binding agents, or agents which bind liquid through swelling, are used as conditioning medium.

**4.** Process according to one of claims 1 to 3, **characterised in that** the conditioning medium is introduced simultaneously at different depths.

**5.** Process according to one of claims 1 to 4, **characterised in that** respective different conditioning media are introduced at different depths of the paste-like masses.

**6.** Process according to one of claims 1 to 5, **characterised in that** during consolidation the paste-like mass is heated.

**7.** Process according to claim 6, characterised in that, together with the conditioning medium, heated gas, particularly air, is introduced into the paste-like mass.

**8.** Process according to one of claims I to 5, **characterised in that** an exothermically acting conditioning medium is used.

**9.** Process according to one of claims 1 to 8, **characterised in that** the rate of advance of the movable device of the vertical rotary cultivator in the forward direction is adjusted to the drying time of the paste-like mass and the distance of the vertical rotary cultivator from the movable device.

**10.** Apparatus for the consolidation of large quantities of paste-like masses, e.g. sludges, bogs or tars, situated in natural or artificial basins, with

- at least one vertical rotary cultivator (50a,b,c) to mix thoroughly at least one conditioning medium with the paste-like mass (1) to be treated, the vertical rotary cultivator (50a,b,c) being movable in a forward direction and transversely to the forward direction and being arranged to introduce the conditioning medium over a given depth,
- means for moving and attaching the vertical rotary cultivator to a movable device (30) and
- means for supplying and for making available the conditioning medium inside or outside the basin in which the paste-like mass is located.

**11.** Apparatus according to claim 10, **characterised in that** the means for attaching and moving the vertical rotary cultivator (50a,b,c) is an extendable jib (35) turnable about at least a vertical and/or about a horizontal axis.

**12.** Apparatus according to claim 10 or 11, **characterised in that** the movable device (30) is a vehicle with low ground pressure.

**13.** Apparatus according to claim 12, **characterised in that** the vehicle is an excavator (30) which at its free end of its jib (35) has an adaptor component (40a, b) for mounting the vertical rotary cultivator (50a,b, c).

**14.** Apparatus according to one of claims 10 to 13, **characterised in that** the vertical rotary cultivator (50a,b,c) is arranged turnably around a vertical axis at the adaptor component (40a,b) or at the free end of the jib (35).

**15.** Apparatus according to one of claims 10 to 14, **characterised in that** the vertical rotary cultivator (50a,b,c) has heatable tools (56,80).

**16.** Apparatus according to one of claims 10 to 15, **characterised in that** the vertical rotary cultivator (50a,b,c) has at least two hollow shafts fitted one inside the other for the supply of different conditioning media at different depths.

**17.** Apparatus according to one of claims 10 to 16, **characterised in that**, in order to make use of the exhaust heat from the drive assembly, the movable device (30) has a heat exchanger with blower which is connected to the vertical rotary cultivator (50a,b, c) by way of a hose.

**18.** Apparatus according to claim 17, **characterised in that** the hose for conveying the heat is brought together with the hose (20a,b) for conveying the conditioning medium.

**19.** Apparatus according to one of claims 10 to 18, **characterised in that** between the movable device (30) and the vertical rotary cultivator (50a,b.c) is provided a device for laying supporting plates (46).

**20.** Apparatus according to one of claims 10 to 19, **characterised in that** an auxiliary motor (75) is provided on the movable device (30).

**Revendications**

**1.** Procédé pour la solidification de grandes quantités de matières pâteuses telles que par exemple des boues, des tourbières ou des goudrons, dans lequel les matières pâteuses se trouvant dans un bassin naturel ou artificiel sont mises en mouvement sur place de manière successive dans des zones localement délimitées et on introduit au moins un agent de conditionnement tout en procédant à une homogénéisation simultanée par agitation avec la matière pâteuse, dans lequel l'agent de conditionnement est acheminé depuis un récipient de réserve se trouvant à l'extérieur ou à l'intérieur du bassin, directement à l'endroit de traitement, dans lequel l'agent de conditionnement est introduit à l'aide d'au moins une fraise verticale en dessous de la surface de la matière pâteuse et est distribué de manière uniforme au-dessus d'une profondeur prédéfinie en continu aussi bien en direction verticale qu'en direction horizontale, et la fraise verticale est déplacée vers l'avant et en direction transversale par rapport au mouvement vers l'avant.

**2.** Procédé selon la revendication 1, caractérisé en ce qu'on utilise, à titre d'agent de conditionnement, des agents solides et/ou liquides.

**3.** Procédé selon la revendication 1 ou 2, caractérisé en ce qu'on utilise l'agent de conditionnement pour la consommation de l'eau par voie chimique ou par adsorption, des agents pour modifier la distribution granulométrique de la matière pâteuse, des liants hydrauliques et/ou tensioactifs ou encore des liants qui se lient au liquide par gonflement.

**4.** Procédé selon l'une quelconque des revendications 1 à 3, caractérisé en ce qu'on introduit l'agent de conditionnement de manière simultanée à différentes profondeurs.

**5.** Procédé selon l'une quelconque des revendications 1 à 4, caractérisé en ce qu'on introduit, à différentes profondeurs des matières pâteuses, respectivement des agents de conditionnement différents.

**6.** Procédé selon l'une quelconque dès revendications 1 à 5, caractérisé en ce qu'on réchauffe la masse pâteuse au cours de la consolidation.

**7.** Procédé selon la revendication 6, caractérisé en ce qu'on introduit, de manière conjointe avec un agent de conditionnement, du gaz réchauffé, en particulier de l'air, dans la masse pâteuse.

**8.** Procédé selon l'une quelconque des revendications 1 à 5, caractérisé en ce qu'on utilise un agent de conditionnement ayant un effet exothermique.

**9.** Procédé selon l'une quelconque des revendications 1 à 8, caractérisé en ce qu'on adapte la vitesse d'avancement du dispositif mobile de la fraise verticale dans son mouvement vers l'avant au temps de séchage de la matière pâteuse et de la distance entre la fraise verticale et le dispositif mobile.

**10.** Dispositif pour la consolidation de quantités importantes de matières pâteuses se trouvant dans des bassins naturels ou artificiels, telles que par exemple des boues, des tourbières ou des goudrons, comprenant

- au moins une fraise verticale (50a, b, c) pour l'homogénéisation par agitation d'au moins un agent de conditionnement avec la matière pâteuse (1) à traiter, dans lequel la fraise verticale (50a, b, c) est à même de se déplacer vers l'avant et en direction transversale par rapport au mouvement vers l'avant et est réalisée pour l'introduction de l'agent de conditionnement audessus d'une profondeur prédéfinie,

- des moyens pour le déplacement et la fixation de la fraise verticale à un dispositif mobile (30) et

- des moyens pour l'acheminement et la mise à disposition de l'agent de conditionnement à l'intérieur ou à l'extérieur du bassin dans lequel se trouve la matière pâteuse.

**11.** Dispositif selon la revendication 10, caractérisé en ce que l'agent pour la fixation et le déplacement de la fraise verticale (50a, b, c) est un avant-bras (35) apte à se déployer et apte à pivoter autour d'au moins un axe vertical et/ou autour d'un axe horizontal.

**12.** Dispositif selon la revendication 10 ou 11, caractérisé en ce que le dispositif mobile (30) est un véhicule possédant une faible pression de contact.

**13.** Dispositif selon la revendication 12, caractérisé en ce que le véhicule est un véhicule de dragage (30) qui présente, à l'extrémité libre de son avant-bras (35) un adaptateur (40a, b) pour le raccordement de la fraise verticale (50a, b, c).

**14.** Dispositif selon l'une quelconque des revendications 10 à 13, caractérisé en ce que la fraise verticale (50a, b, c) est montée en pivotement autour d'un axe vertical sur l'adaptateur (40a, b) ou à l'extrémité libre de l'avant-bras (35).

**15.** Dispositif selon l'une quelconque des revendications 10 à 14, caractérisé en ce que la fraise verticale (50a, b, c) présente des ustensiles (56, 80) qui peuvent être chauffés.

**16.** Dispositif selon l'une quelconque des revendications 10 à 15, caractérisé en ce que la fraise verticale (50a, b, c) présente au moins deux arbres creux emboîtés l'un dans l'autre pour acheminer des agents de conditionnement différents dans des profondeurs différentes.

**17.** Dispositif selon l'une quelconque des revendications 10 à 16, caractérisé en ce que le dispositif mobile (30) présente un échangeur de chaleur comprenant une soufflerie pour utiliser la chaleur perdue de l'équipement moteur, qui est relié via un tuyau flexible à la fraise verticale (50a, b, c).

**18.** Dispositif selon la revendication 17, caractérisé en ce que le tuyau flexible pour le transport de la chaleur est guidé de manière conjointe avec le tuyau flexible (20a, b) pour le transport de l'agent de conditionnement.

**19.** Dispositif selon l'une quelconque des revendications 10 à 18, caractérisé en ce qu'on prévoit, entre le dispositif mobile (30) et la fraise verticale (50a, b, c) un dispositif pour poser des plaques de support (46).

**20.** Dispositif selon l'une quelconque des revendications 10 à 19, caractérisé en ce qu'on prévoit un moteur d'appoint (75) sur le dispositif mobile (30).

10
11
4
3
21a
20b
30
5
46
2
35
50a,b
1
s

Fig. 1

10
11
3
20a
21a
20b
30
35
2
50a,b
1

Fig. 2

75
21a
20b
30
23
22
31a,b
38
52,53
46
24
25
45
20b
37
42
39
36
40a
26
52,53
51
50a,b

Fig. 3

27
58
54a
40a
50a
55
57
56

Fig. 4

28
51
27
41
26
40a
21b
20b
52
53
39
50a,b
54a,b

Fig. 5

20b
26
40a
41
27
54b
50a,b
28
54a

Fig. 6

39
40b
20b
21b
27
54b
28
50a,b
54a
43
42

Fig. 7

10
79
78
77
76
20a
30
35
2
1
s
50a,b
FIG.8

50a,b
B
30
F
F1
F2
s=const.
F1=F2

FIG. 9

50c
54c
80b
2
1
80a
26
84
51
54c
50c
83
81
82
80a
80b

FIG. 11

FIG. 10